Europäisches Patentamt

European Patent Office

Office européen des brevets

(11) Veröffentlichungsnummer: **0 403 872**

**A2**

(12) # EUROPÄISCHE PATENTANMELDUNG

(21) Anmeldenummer: **90110667.4**

(22) Anmeldetag: **06.06.90**

(51) Int. Cl.⁵: **G03B 27/58**

(30) Priorität: **19.06.89 DE 3919973**

(43) Veröffentlichungstag der Anmeldung:
**27.12.90 Patentblatt 90/52**

(84) Benannte Vertragsstaaten:
**CH FR GB IT LI**

(71) Anmelder: **Agfa-Gevaert AG**

**D-5090 Leverkusen 1(DE)**

(72) Erfinder: **Betzold, Wolfram, Dipl.-Ing.**
**Lerchenstrasse 13**
**D-8011 Höhenkirchen(DE)**
Erfinder: **Dietrich, Karl-Heinz**
**Bozenerstrasse 7**
**D-8000 München 90(DE)**
Erfinder: **Griessner, Peter**
**Sachranger Strasse 34**
**D-8000 München 90(DE)**

(54) **Mikrofilm-Durchlaufkamera.**

(57) Eine Mikrofilm-Durchlaufkamera mit einer Vorlagenzuführvorrichtung, einer Verfilmungsstation, einer hieran anschließenden Einrichtung zum Weitertransport der Vorlagen in der Kamera und/oder einer Vorlagenausgabeeinrichtung ist so ausgebildet, daß die Vorlagenzufuhreinrichtung (8) und die Weitertransporteinrichtung (9) eine Vielzahl von Drehkörpern (4)umfaßt, daß jeder der Drehkörper (4) auf einem Ring (3) aufliegt, daß die Ringe (3) gruppenweise auf einer Vielzahl von Transportwalzen (1) derart angeordnet sind, daß sie durch eine der Anzahl der Ringe (3) entsprechenden Anzahl von Durchbrüchen (6a) eines unteren Leitbleches (6) in einen Vorlagenkanal (2) hineinragen, und daß die Transportwalzen (1) mit einem Antrieb verbunden sind mit einer für die Verfilmung einer Vorlage (14) angepaßten Geschwindigkeit.

## Mikrofilm-Durchlaufkamera

Die Erfindung betrifft eine Mikrofilm-Durchlaufkamera mit einer Vorlagenzuführvorrichtung, einer Verfilmungsstation, einer hieran anschließenden Einrichtung zum Weitertransport der Vorlagen in der Kamera und/oder einer Vorlagenausgabeeinrichtung.

Mikrofilm-Durchlaufkameras der eingangs genannten Art sind durch auf dem Markt erhältliche Geräte bekannt. Das bei diesen Geräten angewandte Prinzip des Vorlagentransports mittels einer Vielzahl von angetriebenen endlosen Bändern und darauf aufliegenden Wellen hat den Nachteil, daß ein gleichmäßiger Vorlagentransport nicht sicher zu gewährleisten ist. Ein weiterer Nachteil ist das komplizierte Zerlegen und Zusammenbauen im Servicefall, bedingt durch die zur Führung und zum Antrieb der endlosen Bänder benötigte Mechanik, die von den Bändern umschlungen ist. Die Ursachen für einen ungleichmäßigen Vorlagentransport, der zu einer unscharfen Verfilmung führt, liegen darin, daß

1. der Antriebswellendurchmesser sich innerhalb der Fertigungstoleranzen über die Länge der Antriebswelle ändert,

2. bedingt durch Fertigungstoleranzen Unterschiede in der Dicke der Bänder auftreten,

3. sich die Wellen, die zum Andrücken der Vorlagen an die Bänder dienen, über die gesamte Vorlagenbreite erstrecken.

Die unter 1. und 2. genannten Fehlerursachen führen zu Geschwindigkeitsunterschieden zwischen den Bändern. Die unter 3. aufgeführte Fehlerursache hat eine Änderung der Andruckkraft zwischen den Bändern und der Vorlage zur Folge, und zwar in der Form, daß bei einer Dickenänderung der Vorlage (z.B. Heftklammer) die Andruckwelle an dieser Stelle angehoben wird und dadurch an anderen Stellen entweder abgehoben oder stärker angedrückt wird.

Die Folge davon ist das Auftreten unterschiedlicher Kräfte an den Stellen, an denen die Vorlage auf die über die Vorlagenbreite verteilten Bänder angedrückt wird. Die unterschiedlichen Andruckkräfte im Zusammenwirken mit den unterschiedlichen Bandgeschwindigkeiten führen dazu, daß ein gleichmäßiger Vorlagentransport bei den bekannten Mikrofilm-Durchlaufgeräten nicht mit ausreichender Sicherheit gewährleistet ist.

Der Erfindung liegt daher die Aufgabe zugrunde, eine Mikrofilm-Durchlaufkamera der eingangs genannten Art so auszugestalten, daß die Andruckkraft an jeder Stelle, an der die Vorlage Kontakt mit dem Antriebsmittel hat, möglichst gleich groß ist und bei einer dynamischen Änderung der Andruckkraft an einer Stelle kein Einfluß auf die restlichen Andruckpunkte ausgeübt wird und daß die durch Fertigungstoleranzen bedingten Unterschiede in der Andruckkraft und der Transportgeschwindigkeit so über die Vorlagentransport trotzdem sichergestellt ist, wobei die Transportmittel derart anzuordnen sind, daß im Servicefall jedes schnell mit einem Minimum an Handgriffen zu ersetzen ist.

Diese Aufgabe wird erfindungsgemäß gelöst durch die Merkmale des Hauptanspruchs. Weitere vorteilhafte Merkmale sind den Unteransprüchen entnehmbar.

Der Einsatz von als Kugeln geformten Drehkörpern als Andruckelemente und Ringe als Vorlagentransportelemente hat den Vorteil, daß enge Toleranzgrenzen bei diesen Elementen ohne hohen technischen Aufwand einhaltbar sind. Da zudem die Vorlage nur auf den Ringen aufliegt, ist bei der die Ringe tragende Transportwalze nur an den Stellen, an denen die Ringe sitzen, eine Toleranz einzuhalten und nicht über die gesamte Länge der Transportwalze, was die kostengünstiger macht.

Die Erfindung wird anhand von Zeichnungen beispielhaft näher erläutert. Es ziegen

Fig. 1 eine schematische Darstellung einer Mikrofilm-Durchlaufkamera mit Verfilmungsstation, Umlenkstrecke und erfindungsgemäßen Transportstrecken,

Fig. 2 eine aufgebrochene Ansicht eines erfindungsgemäßen Vorlagentransportes

Fig. 3 einen vergrößerten Ausschnitt aus dem erfindungsgemäßen Vorlagentransport nach Figur 2.

Im gezeigten Ausführungsbeispiel ist der Drehkörper als Kugel ausgebildet.

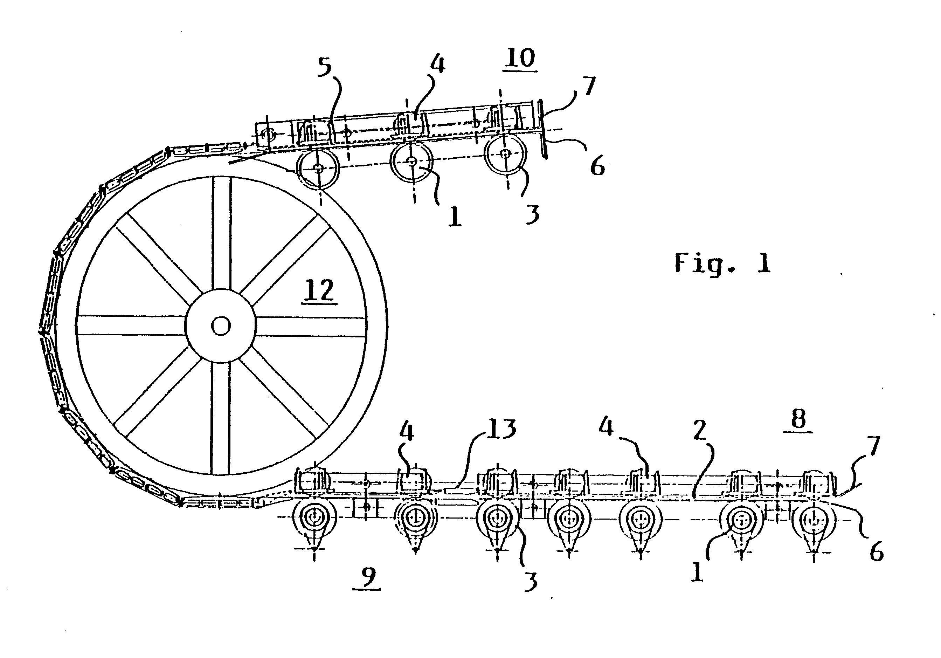

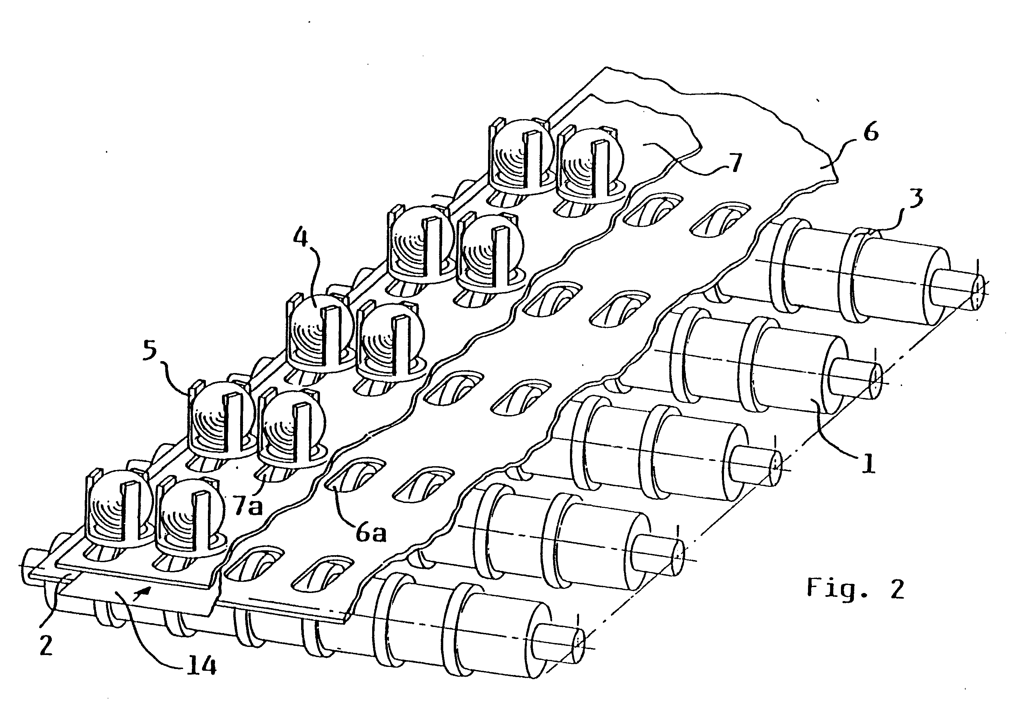

Figur 1 zeigt den prinzipiellen Aufbau einer Mikrofilm-Durchlaufkamera mit einer Vorlagenzufuhreinrichtung 8, einer Verfilmungsstation 13, einer Vorlagenweitertransporteinrichtung 9, einer die Vorlagen um etwa 180 umlenkenden Transporteinrichtung 12 und einer Vorlagenausgabeeinrichtung 10. In Figur 2 ist der Aufbau der Transporteinrichtungen 8, 9, 10 anhand einer aufgebrochenen Teilansicht näher dargestellt. Hierbei sind die in gleichen Abständen mit Ringen 3 besetzten, gerätefest drehbar gelagerten Transportwalzen mit 1 bezeichnet. Der Antrieb der Transportwalzen ist nicht näher gezeigt; er kann mittels Zahnrädern, Zahnriemen oder auf andere bekannte Weist erfolgen.

Über den Transportwalzen 1 ist ein unteres Leitblech 6 angeordnet. Im den unteren Leitblech 6 sind eine Viel zahl von Durchbrüchen 6a vorgesehen, die derart angeordnet sind, daß die Ringe 3 mit ihrem oberen Umfang durch das Leitblech 6 hindurch in einen Vorlagenkanal 2 ragen, der von der Oberfläche des unteren Leitblechs 6 begrenzt wird. Die andere Seite des Vorlagenkanals 2 wird von der Oberfläche des oberen Leitbleches 7 begrenzt. In dem oberen Leitblech 7 ist eine Vielzahl von Durchbrüchen 7a vorgesehen, die den Durchbrüchen 6a direkt gegenüberliegen. Durch jeden Durchbruch 7a hindurch ragt je eine in einem Käfig 5 frei drehbar gelagerte Kugel 4, die in Größe und Gewicht mit den anderen Kugeln 4 übereinstimmt.

Die Kugel 4 kann aus Stahl oder einem anderen Material sein, dessen Dichte groß genug ist, um bei dem zur Verfügung stehenden Volumen Kugeln mit einem zur Erzeugung der Andruckkraft ausreichenden Gewicht herzustellen. Es ist auch möglich, die Andruckkraft mittels geeignet angeordneter Magnetpole zu erzeugen.

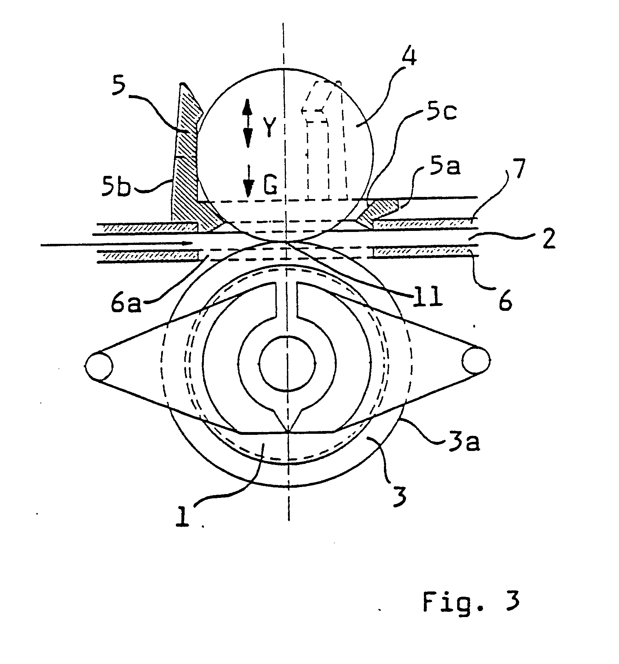

Figur 3 ist eine vergrößerte Teilansicht aus einer Vorlagentransportvorrichtung nach Figur 2 und zeigt eine einzelne Kugel 4, die in einem Käfig 5 gelagert ist. Der Käfig 5 weist eine ringförmige Basis 5a auf, deren Innenseite 5c tangential zur Oberfläche der Kugel 4 verläuft und die einen Innendurchmesser aufweist, der kleiner als der Durchmesser der Kugel 4 ist. Mindestens drei Krallen 5b, die senkrecht zur Basis 5a verlaufen, halten die Kugel 4 derart, daß sie nur senkrecht zur Ebene des Vorlagenkanals in eine Richtung Y bewegbar ist. Der Käfig 5 ist in einem Durchbruch 7a des oberen Leitblechs 7 eingesteckt und somit fest mit diesem ver bunden. Die Kugel 4 liegt in einem Auflagepunkt 11 an der Oberfläche 3a des darunter angeordneten Ringes 3 auf. Der Ring 3 umschließt die Transportwalze 1, die in einem festen Abstand zum Leitblech 6 gerätefest antreibbar gelagert ist.

Die Wirkungsweise der in den Figuren 1 bis 3 gezeigten Vorlagentransportvorrichtung ist dabei folgende:

Nach dem Einschalten der Mikrofilm-Durchlaufkamera werden die Transportwalzen 1 auf eine geeignete Weise gleichsinnig angetrieben. Die auf den einen hohen Reibwert aufweisenden Oberflächen 3a der Ringen 3 liegenden Kugeln 4 werden in ihren Käfigen 5 entgegen dem Drehsinn der Transportwalzen 1, bzw. Ringen 3, um ihren eigenen Schwerpunkt gedreht. Will nun eine Bedienungsperson eine Vorlage 14 mikroverfilmen, so führt sie die Vorlage 14 mit Hilfe eines nicht gezeigten seitlichen Anschlags in den von den Leitblechen 6, 7 gebildeten Vorlagenkanal 2 der Vorlagenzuführvorrichtung 8 ein. Die Vorlageneingabe kann auch automotisch mittels eines Vorlagen-Feeders geschehen. Dabei trifft die Vorderkante der Vorlage 14 auf die über die Vorlagenbreite verteilten Ringe 3 und wird von der Bedienungsperson oder vom Vorlagen-Feeder zwischen die Ringe 3 und die Kugeln 4 geschoben.

Zwischen der Oberfläche der Vorlage 14 und den Oberflächen 3a der Ringe 3 entsteht nun eine Reibkraft, die bestimmt ist durch das Gewicht G der jeweiligen Kugel 4 und den Reibwert zwischen Vorlagen- und Ringoberfläche. Aufgrund dieser Reibkraft und der Rotation der Trans portwalzen 1 wird nun die Vorlage 14 von der Vorlagenzuführeinrichtung 8 eingezogen und zur Verfilmungsstation 13 transportiert. Nach der Verfilmungsstation 13 wird die Vorlage 14 von der Vorlagenweitertransporteinrichtung 9 erfaßt und der die Vorlagen 14 um etwa 180 umlenkenden Transporteinrichtung 12 zugeführt, die die Vorlagen 14 zur Vorlagenausgabeeinrichtung 10 transportiert. Die Vorlagenausgabeeinrichtung 10 legt, nach der Lehre der deutschen Patentanmeldung P 38 39 854.0-51, die mikroverfilmte Vorlage 14 schließlich in einem nicht gezeigten Auffangebehälter ab. Zum Ablegen besonderer Vorlagen 14 kann zusätzlich ein ebenfalls nicht gezeigter Auffangebehälter vorgesehen sein, der unmittelbar auf die Vorlagenweitertransporteinrichtung folgt.

Die für eine fehlerfreie Verfilmung notwendige Gleichmäßigkeit des Vorlagentransports wird nun hauptsächlich von der Reibkraft und der Umfangsgeschwindigkeit der Ringe 3 bestimmt.

Die statische Reibkraft kann bei einer homogenen Vorlagenoberfläche sowie einem hohen Reibwert der Ringoberfläche 3a in sehr engen Grenzen gehalten werden, da die Kugeln 4 ohne großen technischen Aufwand mit hoher Rundlaufgenauigkeit und einer sehr geringen Gewichtstoleranz fertigbar sind.

Bei einer für alle Transportwalzen 1 gleichen Winkelgeschwindigkeit wird die Umfangsgeschwindigkeit der Ringge 3 durch deren Dicke bestimmt und durch den Trans portwalzendurchmesser an der Stelle, an der der Ring 3 sitzt.

Trotz einer mit einfachen Mitteln genauen Fertigbarkeit der Ringe 3 können aufgrund der Toleranzen Unterschiede in den Umfangsgeschwindigkeiten auftreten. Es ist nun ein besonderer Vorteil der erfindungsgemäßen Vorrichtung, daß trotz der auftretenden Unterschiede in den Umfangsgeschwindigkeiten ein gleichmäßiger, gerader Vorlagentransport gewährleistet ist.

Bei den bekannten Mikrofilm-Durchlaufkameras wirkt sich ein Unterschied in der Transportgeschwindigkeit zweier Transportbänder über die ganze Vorlagenlänge aus und ein Gewichtsunterschied der Andruckwellen über die gesamte Vorlagenbreite. Toleranzunterschiede im Kugelgewicht G und in der Dicke des Ringes 3 sowie im Durchmesser der Transportwalze 1 an der Stelle, an der der Ring 3 angebracht ist, wirken sich nur im zugehörigen Auflagepunkt 11 aus und wechseln von Auflagepunkt zu Auflagepunkt. Daher gleichen sich die Unterschiede in der Reibkraft und der Umfangsgeschwindigkeit über die Vorlagenfläche aus und die Vorlagen 14 werden gleichmäßig und gerade transportiert.

Haben die Ringe durch Verschleiß ihren Durchmesser verändert, sind sie mit geringstem Aufwand auszuwechseln. Dazu müssen nur die Walzen einzeln entnommen werden, was sowohl in axialer Richtung als auch nach oben vorgesehen sein kann. Andere Drehkörperformen sind möglich, z.B. kurze Zylinder, die auf Ringen 3 mit kreisförmigem Querschnitt aufliegen. ·

**Ansprüche**

1. Mikrofilm-Durchlaufkamera mit einer Vorlagenzuführvorrichtung, einer Verfilmungsstation, einer hieran anschließenden Einrichtung zum Weitertransport der Vorlagen in der Kamera und/oder einer Vorlagenausgabeeinrichtung, dadurch gekennzeichnet, daß die Vorlagenzufuhreinrichtung (8) und die Weitertransporteinrichtung (9) eine Vielzahl von Drehkörpern (4) umfaßt, daß jeder der Drehkörper (4) auf einem Ring (3) aufliegt, daß die Ringe (3) gruppenweise auf einer Vielzahl von Transportwalzen (1) derart angeordnet sind, daß sie durch eine der Anzahl der Ringe (3) entsprechenden Anzahl von Durchbrüchen (6a) eines unteren Leitbleches (6) in einen Vorlagenkanal (2) hineinragen, und daß die Transportwalzen (1) mit einem Antrieb verbunden sind mit einer für die Verfilmung einer Vorlage (14) angepaßten Geschwindigkeit.

2. Vorrichtung nach Anspruch 1, dadurch gekennzeichnet, daß der Vorlagenkanal (2) aus dem unteren Leitblech (6) und einem oberen Leitblech (7) besteht.

3. Vorrichtung nach Anspruch 2, dadurch gekennzeichnet, daß im oberen Leitblech (7) eine Vielzahl von Durchbrüchen (7a) vorgesehen ist, die den Durchbrüchen (6a) im unteren Leitblech (6) gegenüberliegen, und daß jeweils ein Drehkörper (4) derart durch einen Durchbruch (7a) hindurchragt, daß der Dreh körper (4a) in einem Auflagepunkt (11) auf dem Ring (3) aufliegt.

4. Vorrichtung nach Anspruch 3, dadurch gekennzeichnet, daß der Drehköroer (4) eine Kugel ist, die mit ihrem Eigengewicht (G) auf dem Auflagepunkt (11) aufliegt oder durch geeignet angeordnet Magnetpole auf den Auflagepunkt (11) gedrückt wird.

5. Vorrichtung nach Anspruch 4, dadurch gekennzeichnet, daß jeder der als Kugel ausgebildeten Drehkörper (4) freidrehend in einem Käfig (5) gelagert ist, in dem er in der Ebene des Vorlagenkanals (2) fixiert ist und nur senkrecht in eine Richtung (Y) im Käfig (5) bewegbar ist, daß je ein Käfig (5) in einem Durchbruch (7a) des oberen Leitblechs (7) befestigt ist, und daß jeder der als Kugel ausgebildeten Drehkörper (4) im Gewicht (G) mit dem anderen übereinstimmt.

6. Vorrichtung nach Anspruch 5, dadurch gekennzeichnet, daß der Käfig (5) aus einer ringförmigen Basis (5a) sowie aus mindestens drei, senkrecht zur ringförmigen Basis (5a) verlaufenden Krallen (5b) besteht und daß die Krallen (5b) und die ringförmige Basis (5a) einstückig, z.B. aus Kunststoff im Spritzgießverfahren, hergestellt sind.

7. Vorrichtung nach Anspruch 6, dadurch gekennzeichnet, daß der Innendurchmesser der ringförmigen Basis (5a) kleiner als der Durchmesser des als Kugel ausgebildeten Drehkörpers (4) ist, und daß eine In nenseite (5c) der ringförmigen Basis (5a) als Hohlkegel ausgebildet ist.

8. Vorrichtung nach einem der vorhergehenden Ansprüche, dadurch gekennzeichnet, daß die auf den Transportwalzen gegenüber den Drehkörpern (4) angeordneten Ringe (3) einen rechteckigen Querschnitt aufweisen,und daß die den Drehkörpern (4) zugewandte Oberfläche (3a) der Ringe (3) einen hohen Reibwert aufweist.

9. Vorrichtung nach einem der vorhergehenden Ansprüche, dadurch gekennzeichnet, daß jede der Transportwalzen (1) antreibbar in einem festen Abstand zum Vorlagenkanal (2) gerätefest gelagert ist.

Fig. 1

EP 0 403 872 A2

Fig. 2

Fig. 3